# EUROPEAN PATENT SPECIFICATION

(11) **EP 1 673 180 B1**
(45) Date of publication and mention of the grant of the patent: **01.08.2007**
(21) Application number: 04711416.0
(22) Date of filing: 16.02.2004
(51) Int. Cl.: B09B 3/00, B29B 17/02

(54) **INDUSTRIAL PROCESS FOR RECYCLING WASTE, ITS APPLICATIONS AND PRODUCTS OBTAINED**
INDUSTRIELLER PROZESS ZUM ABFALLRECYCLING, SEINE ANWENDUNGEN UND ERHALTENE PRODUKTE
PROCEDE INDUSTRIEL POUR LE RECYCLAGE DE DECHETS, SES APPLICATIONS ET PRODUITS OBTENUS

(30) Priority: 09.10.2003 IT TP20030002
(43) Date of publication of application: 28.06.2006
(73) Proprietor: DI GIOVANNI, Maurizio, 81100 Trapani (IT)
(72) Inventor: DI GIOVANNI, Maurizio, 81100 Trapani (IT)
(74) Representative: Tansini, Elio Fabrizio
(86) International application number: PCT/IB2004/000382
(87) International publication number: WO 2005/035148

(56) References cited:
- WO-A-01/94457
- US-A- 5 223 544
- US-A- 5 405 429
- US-A- 5 559 159
- US-A- 5 789 636
- US-A- 5 876 644
- PATENT ABSTRACTS OF JAPAN vol. 1999, no. 03, 31 March 1999 (1999-03-31) & JP 10 332118 A (MITSUI ENG & SHIPBUILD CO LTD), 15 December 1998 (1998-12-15)

## Description

The present invention relates to an industrial process, a so-called oxido-destruction process, for conveniently recycling every type of waste of any origin. Materials obtained thereof have several interesting possibilities of use in the industrial field. Said process is preferably carried out continuously, in a suitable mobile or stationary system, by subjecting said waste to an oxidative demolition-depolymerization reaction, followed if necessary by a repolymerization reaction depending on the desired end product. In the first case biologically stable, sterile, fluid and solid materials are obtained, whereas in the second case a sterile stable expanded polymer is obtained, having a polyurethane structure. The oxidative demolition-depolymerization reaction is preferably carried out by mixing intensively waste with a suitable super-oxidizing mixture in the presence of a mixture of suitable catalysts. The repolymerization reaction is carried out in its turn by subjecting the product deriving from demolition-oxidation depolymerization directly to the action of a suitable repolymerizing mixture, in the presence of a mixture of suitable catalysts.

### BACKGROUND

Waste disposal gives rise to several problems for both technical and environmental reasons. Most of all, waste is disposed of in dumps and is only partially recycled and/or destroyed with thermal processes.

For instance, the humid and/or green fraction deriving from separate waste collection is biostabilized, though never completely, through aerobic or anaerobic processes requiring long times, about 4-6 months.

On the other hand, the recycling of post-consumables or scrap materials is characterized by a difficult reuse due to the loss of original properties; indeed, recycled products often do not find reliable applications since they cannot ensure the same performances of originally manufactured items.

For wood processing scraps most shavings and powders are placed in dumps or are thermally destroyed. Unfortunately, during combustion powders and shavings generate polluting gas compounds, beyond ash pollution.

The same applies for rubbers in generals and for tires, most of which are thermally destroyed, with well known pollution problems, and few of them are recycled.

On the other hand, polyurethane scraps are placed in dumps or thermally destroyed, such as other plastic post-consumables.

Also animal waste is burnt or used for producing animal feed. Burning results in gas emissions with a high presence of NOₓ and a considerable ash generation.

Animal meals can then be only burnt today. However, ashes can contain unburnt residues infected by BSE (Bovine Spongiform Encephalopathy) and/or by other types of ESTs (Transmitted Spongiform Encephalopathies).

Household solid waste (RSU in Italian, which stands for Rifiuti Solidi Urbani) contain on average 40% by weight and 60% by volume of packaging, made of cellulose, plastic, polystyrene, metals, glass. The separate recycling of these materials, beyond being expensive, is difficult and sometimes impossible. Beyond being stocked in dumps, eventually they are thermally destroyed, with well known pollution problems.

Thermal destruction enables a partial recovery of thermal energy, but does not ensure zero pollution emissions; as a matter of fact, despite the post-combustion of exhaust gases and the presence of progressive filters, at dump sites there are still powders, dioxins deriving from plastic materials, sulfur dioxide, carbon oxide, nitrogen oxide. Waste then is not completely burnt; residual combustion ashes, about 40% by weight of initial waste, are sent to dumps as unburnable materials. Said disposal of unburnable materials, however, results in further pollution problems, since under the effect of winds ashes are taken away from the dump site, whereas from a chemical point of view rains cause serious ecologic problems, because sulfur and chlorine compounds build highly corrosive acids. Moreover, since much burnt waste has toxic properties, residual ashes are a concentrate of noxious substances. That is why ashes cannot be disposed of in dumps for household solid waste, but should be sent to special dumps. In recent times, in order to avoid thermal destruction or placing loosely in dumps, waste is packed up in blocks kept together by plastic films or nets, which are then placed in dumps. Said disposal, however, does not modify waste at all, which in absence of oxygen undergoes a subsequent rotting process, which is also polluting.

Other treatments, developed as alternatives to the two treatments described above, have proved as unsatisfactory. Among them, physical treatment for instance based on humid heat (generally at 100°C for one hour), freezing, UV and/or ionizing radiations have not proved particularly useful for finally solving the problems disclosed above.

Recently it has been suggested (Italian patent application TP2001A000001) to recycle a certain amount of waste of various origin by subjecting it to a combined process of oxidation with hydrogen peroxide and subsequent trimerization with trimerized isocyanate. This process, however, is only a preliminary feasibility study and as such has not proved able to solve efficiently the problem of an environmentally friendly and industrially competitive recycling/disposal of waste of any origin. Furtherware WO 01/94457 discloses a process for recovering polyamide material which uses a depolymerisation step followed by a repolymerisation step.

### DESCRIPTION

Thanks to the present invention every possible type of waste can be recycled and reconverted in an efficient and economic way into useful materials, with several interesting possibilities of use.

By mere way of non-limiting example, the process according to the present invention has proved to perfectly apply on an industrial level to:
- household solid waste (RSU) from non-separate collection;
- upper grain and lower grain fractions;
- humid and/or green fractions from separate collection;
- dung;
- hospital waste;
- agroindustrial waste, deriving from farms, slaughterhouses, fish or agricultural industries;
- industrial scraps, such as rubber, plastic, wood, organic and inorganic fibers (including for instance mineral wools and asbestos);
- disposal residues in the automotive field;
- purging sludge;
- ashes;
- products recycled from post-consumables or scraps.
   Therefore, one of the objects of the present invention is a process for recycling and converting, in an industrially feasible and competitive way, all possible waste made of materials used in several market branches.
   A second preferred object of the invention is a specific system for implementing the process as referred to above. Said system basically comprises means for waste volumetric reduction and compacting and a multistage reactor, where the oxido-destruction process takes place. Preferably, said system also comprises means for collecting, isolating and separating products resulting from oxido-destruction treatment. Said system is most preferably combined with two turbo-electrophotolytic reactors for on-site preparation and metering of the super-oxidizing mixture for waste oxidative demolition-depolymerization.
   Moreover, an object of the invention is also represented by the mixtures of reagents activating the oxidative demolition-depolymerization reaction (super-oxidizing mixture) and the repolymerization reaction (repolymerizing mixture) of waste undergoing said process.
   Other objects of the invention are the products obtained with said process and the use thereof.
   An additional object of the invention is the use of the process and system as specified above for recycling and converting every type of waste into industrially useful products.

### DESCRIPTION OF THE FIGURES

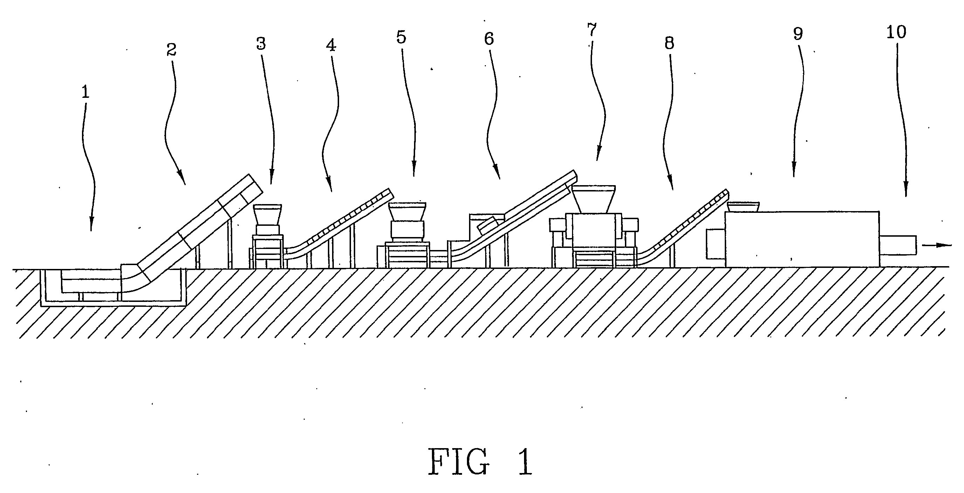

**Figure 1** shows by way of example the general structure of one of the preferred embodiments of the oxido-destruction system according to the present invention (a stationary system).
It shows in particular:
(1) the waste pit;
(2) a belt conveyor for transferring waste from (1) to a crusher;
(3) a breaker, equipped with a system for breaking bags, boxes and coarse materials, if present;
(4) a belt conveyor, onto which an electromagnetic system for separating metal parts is located. Said belt conveys said waste broken in (3) to a crusher;
(5) a crusher, where waste is reduced to a size of about 10 cm;
(6) a belt conveyor, which transfers waste crushed in (5) to a refiner;
(7) a refiner, which can reduce waste to an average size of few centimeters;
(8) a belt conveyor, preferably with variable speed, which supplies the oxido-destruction reactor with waste refined in (7);
(9) a multistage reactor with variable section, where waste oxido-destruction process occurs;
(10) is the reactor exit, where means for collecting and conveying processed waste are placed.

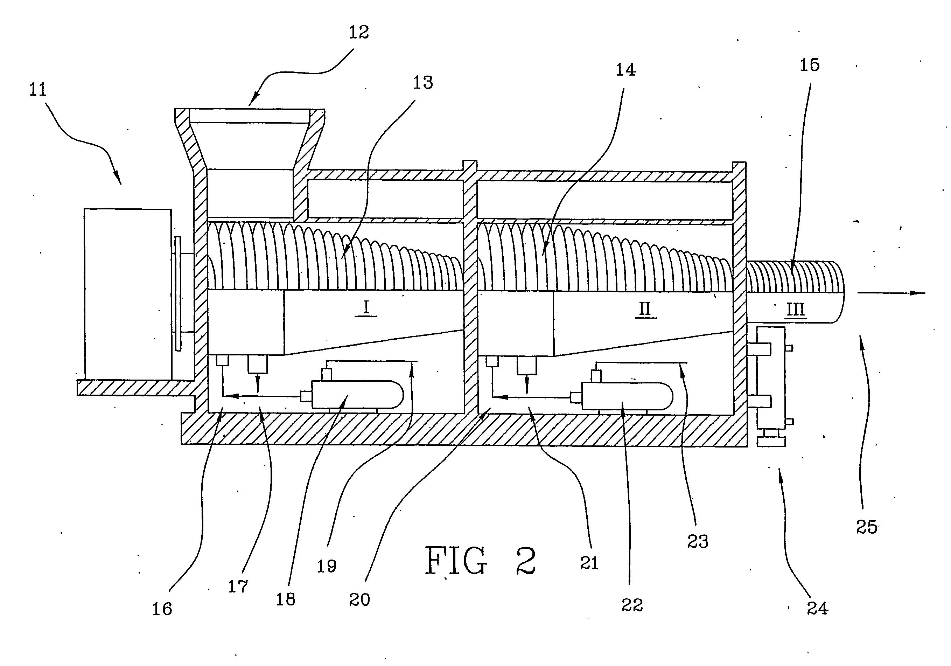

**Figure 2** shows schematically one of the preferred embodiments of the multistage reactor where waste oxido-destruction process occurs.
It shows in particular
(I) the first reactor chamber, whose section is shaped like a cylinder and a frustum of cone;
(II) the second reactor chamber, whose section is shaped like a cylinder and a frustum of cone;
(III) the third reactor chamber, with cylindrical section;

(11) a hydraulic speed variator;
(12) a feeding hopper;
(13) a first cylindrical-conical rotary spiral;
(14) a second cylindrical-conical rotary spiral;
(15) a third cylindrical rotary spiral;
(16) the entry of the super-oxidizing mixture into the first reactor chamber;
(17) the discharge of the super-oxidizing bath;
(18) the electric pump feeding the super-oxidizing mixture;
(19) the intake of the super-oxidizing mixture;
(20) the entry of the repolymerizing mixture into the second reactor chamber;
(21) the discharge of the repolymerizing bath;
(22) the electric pump feeding the repolymerizing mixture;
(12) the intake of the repolymerizing mixture;
(24) a hydraulic positioner;
(25) is the reactor exit.

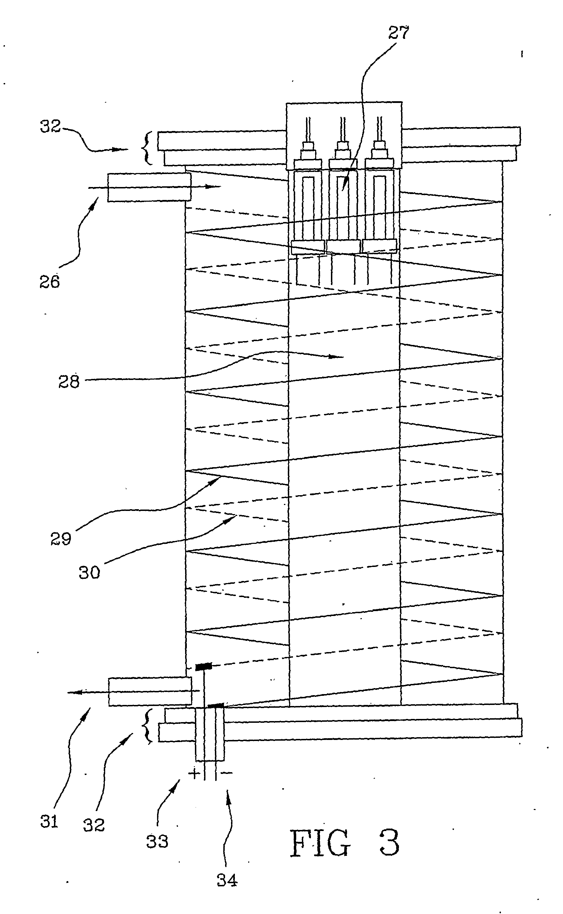

**Figure 3** shows schematically one of the specific turbo-electrophotolytic reactors generating on-site the super-oxidizing mixture.
It shows in particular:
(26) the entry of the fluid to be treated;
(27) UV lamps;
(28) the transparent Teflon cylinder containing UV lamps;
(29) the spiral-shaped anode;
(30) the spiral-shaped cathode;
(31) the exit of processed fluid;
(32) closing flanges and counter-flanges;
(33) current positive pole;
(34) current negative pole.

### DETAILED DESCRIPTION

The main object of the present invention is therefore an oxido-destruction process, comprising the following steps:
a) physical preliminary treatment for waste volumetric reduction and compacting, so as to obtain a homogenous refined mixture free of ferrous/metal and/or too large residues;
b) feeding said mixture deriving from step a) into a first chamber of a multistage reactor, in which the mixture undergoes an oxidative demolition-depolymerization process;
c) feeding said oxidized mixture deriving from step b) into a solid-liquid extractor, in which the mixture is separated into its components; or
d) feeding said oxidized mixture deriving from step b) into a second chamber of said multistage reactor, in which the mixture is activated to a repolymerization process;
e) feeding said activated mixture deriving from step d) into a third chamber of said multistage reactor, in which said repolymerization develops, and then into suitable collection or conveying means, in which said repolymerization reaction is completed, so as to obtain a sterile stable expanded polymer;
said process being characterized in that:
- said oxidative demolition-depolymerization reaction as in step b) is carried out by intensively mixing the refined waste mixture with a super-oxidizing mixture, in the presence of catalysts;
- said repolymerization reaction as in step d) is carried out by intensively mixing said oxidized mixture with a repolymerizing mixture, in the presence of catalysts.

The steps of said process are preferably carried out continuously.

The physical preliminary treatment for waste volumetric reduction as in step a) preferably includes a series of consecutive operations involving breaking, removal of ferrous and/or metallic residues, crushing, refining, which lead to compacting and homogenization of the initial mass, with subsequent cost reduction.

The series of operations for waste physical preliminary treatment as listed above is shown in accompanying Figure 1.

Said Figure 1 shows a stationary system. However, a mobile system, for instance on wheels, leaving aside its smaller size, will have a sequence of basically identical or equivalent components.

Said physical preliminary treatment also enables to carry out a preliminary selection and helps the subsequent oxidative demolition-depolymerization reaction, by favoring the intensive mixing of the refined mixture thus obtained with the super-oxidizing mixture and the catalysts.

During step b) the refined mixture referred to above is fed continuously into the first chamber of.a multistage reactor.

A preferred structure of said multistage reactor is shown in cross section in accompanying Figure 2.

It shows the first chamber, whose section is shaped like a cylinder and a frustum of cone, the second chamber, whose section is also shaped like a cylinder and a frustum of cone, and the third chamber, with cylindrical shape, connected in series one to the other. Inside said three chambers there is also the shaft-free double blade rotary spiral, having the same profile as said chambers, which continuously mixes waste and reagents.

Passing through said first chamber, said refined mixture undergoes the oxidative demolition-depolymerization reaction by intensive mixing with a super-oxidizing mixture in the presence of catalysts.

Said super-oxidizing mixture is preferably prepared and metered on-site by using two turbo-electrophotolytic twin reactors combined with the system.

The preferred structure of one of said turbo-electrophotolytic reactors is shown in cross section in accompanying Figure 3.

These reactors are characterized in that they combine into the same appliance the function of an electrolytic cell and of a photolytic reactor.

As a matter of fact, said reactors are characterized in that they comprise the combination into one reactor body of:
- an electrolytic cell; and
- a photolytic reactor.

Moreover, they use spiral-shaped instead of flat surface electrodes; said electrode shape enables to reduce electrolytic cell volume, electrode surface and the electric energy applied to said electrodes.

In particular, the reactors are characterized by the following innovative features:
they comprise an outer cylindrical body made of stainless steel, closed on both ends by flanges and
counter-flanges. On one side UV lamps, housed inside a transparent Teflon cylinder, and on the other side the electrodes wound as spirals around the aforesaid Teflon cylinder, are fitted onto said flanges and
counter-flanges. Preferably, of the two electrodes the cathode is made of copper and the anode of iron. The fluid to be subjected to the combined electrochemical and photolytic treatment (turbo-electrophotolytic treatment) flows between the negative electrode (cathode) and the positive electrode (anode), while at the same time it is bombed by UV rays emitted by the lamps. The electrolytic action develops thanks to the direct current the two spiral-shaped electrodes are supplied with. On the other side, the photolytic action is obtained by using special mercury-vapor lamps designed to emit maximum energy at a frequency of 253.7.nanometers, which proves particularly efficient for photochemical transformations.

In the first reactor an acid mixture A) undergoes a turbo-electrophotolytic treatment, which mixture preferably comprises: peroxides (50-80% by weight), acetic acid (7-15%), citric acid (5-13%), stabilizers (1%).

Said acid mixture A) (conventionally designed by the Applicant "peroacetric acid") is added with sodium hydroxide so as to neutralize acetic acid. During treatment, within said mixture A) (or "peroacetric acid") a certain amount of highly reactive oxidizing species is generated, such as in particular oxygen **O₂**, radicals **·OH** and ozone **O₃**. As a result, at the end of the combined electrolytic and photolytic treatment, a strongly oxidizing mixture is obtained, which is already able as such to attack organic substances.

In the second reactor mixture B) undergoes a turbo-electrophotolytic treatment, which mixture comprises an aqueous phase (preferably recycled from oxido-destruction process) added with brine (containing on average 5-10% by weight of NaCl), preferably in amount of about 10-20% by weight with respect to the recycled solution. During treatment, within said mixture B) highly oxidizing species are generated, such as **O₂**, **chlorine**, which further reacts so as to obtain sodium hypochlorite (**NaClO**), and **O₃**. Also the mixture obtained at the end of this treatment is thus strongly oxidizing.

Both mixtures, after treatment in the two turbo-electrophotolytic reactors, are united so as to obtain the final super-oxidizing mixture according to the present invention. In other words, after the turbo-electrophotolytic treatment, the two solutions A) and B) are mixed together and suitably metered in variable ratios depending on the type of waste to be treated and on the desired end product.

Said super-oxidizing mixture is then fed into the first chamber of the multistage reactor so as to perform the oxidative demolition-depolymerization reaction as in step b) previously described.

The super-oxidizing mixture thus prepared is extremely rich in strongly reactive oxidizing species. In particular hydroxyl radicals ·OH, having an oxidative potential of 2.74, versus 1.76 of hydrogen peroxide, 1.36 of chlorine and 1.23 of oxygen, are super-oxidizing and, in combination with ozone, can attack and destroy any organic substance. Moreover, hydrogen peroxide inside the mixture can react with hypochlorite, thus developing large amounts of oxygen, which improve the oxidizing and disinfecting power of said mixture.

Preferably, therefore, the super-oxidizing mixture according to the present invention is prepared by suitably mixing the two oxidizing solutions (deriving from mixture A) and from mixture B), respectively) prepared in the two turbo-electrophotolytic reactors previously described, and is characterized in that it comprises a large amount of highly reactive oxidizing species such as hydroxyl radicals OH, ozone O₃, oxygen O₂, sodium hypochlorite NaClO, peroxides. The amount of these species can be suitably varied by changing for instance operating parameters applied to the turbo-electrophotolytic reactors, such as temperature and/or process duration.

In mixture A), "peroacetric acid", as referred to above, hydrogen peroxide can also be replaced by sodium peroxide, Na₂O₂. In such a case an aqueous 20% solution of Na₂O₂ and magnesia in the presence of catalysts, such as copper, cobalt, nickel, manganese salts, is preferably used.

Another substance to be used instead of hydrogen peroxide is sodium bicarbonate NaHCO₃.

Catalysts accelerating the oxidative demolition-depolymerization process as in step b) basically comprise a mixture of molecular sieves, kaolin, clay, sodium aluminum silicates. By way of non-limiting example, one of the preferred compositions of said mixture comprises: 75% of molecular sieves, 10% of kaolin, 8% of clay, 7% of sodium aluminum silicate blue powder (percentages refer to weight).

These catalysts have proved particularly useful, since they have a large surface area and thus enable to treat up to one hundred times the amount of molecules that can be absorbed onto a conventional amorphous catalyst. Moreover, they also act as molecular sieves and allow to trap in channels and cavities of their structure a series of molecules and toxic residues such as cations of alkali or alkaline-earth metals. On average, they are characterized by the following chemical-physical properties:
- chabazite-phillipsite concentration;
- gravimetric analysis (chabazite + phillipsite): 79% by weight;
- absolute density: 2.10 g/cm³;
- apparent density: 0.70-1.05 g/cm³;
- max. humidity: 7%;
- max. tolerable temperature: 350°C;
- absorption selectivity for some cations: chabazite: K⁺>Ag⁺>Rb⁺>NH⁴⁺>Pb⁺>Na⁺ Ba²⁺>Sr²⁺>Ca²⁺; phillipsite: Cs⁺ Rb⁺ K⁺>Na⁺>Li⁺ Ba²⁺>Ca²⁺ Sr²;
- chemical composition (percentage of oxides): SiO₂ 51.80%; Al₂O₃ 18.34%; Fe₂O₃ 3.40%; MgO 0.96%; CaO 4.73%; BaO 0.35%; SrO 0.04%; Na₂O 0.60%; K₂O 4.91%.

Possible substitutes of molecular sieves can be chosen among bikitaite, Li₂[A1₂Si₄O₁₂]·H₂O; heulandite, Ca₄[Al₈Si₂₈O₇₂]·24H₂O, as well as faujasite, (Na₂, Ca, Mg)₂₉[Al₅₈Si₁₃₄O₃₈₄]·24H₂O.

The preferable amount, of molecular sieves varies from about 1% by weight with respect to the weight of waste entering the reactor and about 4% by weight for metal ion absorption.

Molecular sieves absorb small molecules such as for instance formic acid and methanol, remove SO₂ and reduce dramatically nitrogen load and ammonium nitrates. They further remove Pb, Cr and other heavy metals, also in the presence of possible interfering elements such as NaCl. They also have a good affinity for Cd and Cu.

Kaolin inside the catalyst mixture belongs to hydrosilica tes and has the following chemical composition: Al₂O₃ x SiO₂ x 2H₂O, where alumina is about 38% and silica about 48%. Before being added to the catalyst mixture kaolin is activated by heating at 1200°C. Together with clay it has the following functions:
- absorbing function: 20 to 50% by weight;
- filtering function: towards toxic impurities;
- sanitizing function: it helps sterilization;
- catalytic function: it accelerates chemical and biological reactions.

Sodium aluminum-silicate activates clay functions as polymerization catalyst.

Basically, therefore, in the demolition-oxidative polymerization reaction these catalysts have a double effect: they accelerate the action of the super-oxidizing mixture and trap various toxic residues, represented for instance by heavy metals and various polluting elements, such as iron, chrome, chlorides, oils, fats. Advantageously, said trapping action enables to reduce dramatically or even cancel the content of said polluting elements in end products.

Step c) is used when sterile, biologically stable recycled products are required. In this case, the oxidized mixture getting out of the first reactor chamber is sent and collected in a solid-liquid extractor where the liquid phase is separated from the solid phase.

Said mixture fed into said solid-liquid extractor is then separated into a sterile, liquid or fluid-dense organic phase and into a sterile solid dry phase.

The first sterile, liquid or fluid-dense organic phase has unexpectedly shown excellent amending and fertilizing properties. It is thus very conveniently used as fertilizing compost, absolutely non-polluting, completely stable and free of any kind of bacteria, therefore also ecologically competitive.

The second phase, a sterile dry biostable solid .(in practice it is a dry biomass), is particularly useful for instance as non-polluting fuel. This solid residue has indeed an excellent caloric yield and excellent non-polluting properties, since it does not give rise to smokes, ashes or other particulate residues. Another useful field of application for the use of this biostable non-polluting mass has been identified in the reclamation, for instance by covering, of traditional dumps. As a consequence, also this recycled material has proved conveniently useful and ecologically compatible.

Step c) is then preferably used for rapid composting of humid and green fractions and of dung.

Another particularly preferred application relates to the stabilization and oxidative saturation of sludge deriving from purging systems.

On the other hand, step d) is used as an alternative to step c) when the waste mixture has to be turned into another type of product, i.e. into an expanded polymer with elastic skeleton and intercommunicating cells, which can be used for other applications in different technical fields.

In this case, the oxidized mixture getting out of the first chamber of the multistage reactor is sent as such, i.e. still impregnated with residual super-oxidizing mixture, directly into a second chamber of said multistage reactor. As shown in Figure 2, said second chamber is connected in series to the first one and contains the repolymerization reacting mixture. In this second chamber the oxidized mixture coming from the first chamber gets intensively impregnated with the repolymerization mixture, and is then sent continuously into a third chamber placed in series with respect to the second one. In said third chamber of the multistage reactor, the repolymerization reaction of the components of the oxidized mixture takes place. The repolymerization reacting mixture according to the present invention preferably comprises:
- a mixture of diphenyl-methane-4,4'-diisocyanate and/or isomers and homologues thereof (for instance 4,4'-diisocyanate-bis(1,4-isocyanatephenyl)methane), containing about 25% to 35% of NCO groups, preferably about 30 to 32%; said mixture is dispersed into an isomer mixture of xilenes in a concentration of 50-60% by weight;
- diazabicyclooctane (DABCO), in a percentage of 1%;
- additives, such as N,N-dimethyl-acetylamine (or N,N-dimethyl-aminoethanol), in a percentage of 1%;
- catalysts, in a percentage of 1 to 6% by weight.

Preferably, the same mixture of catalysts also used in the previous oxidative demolition-depolymerization reaction is used. In this case sodium aluminum silicate in blue powder is preferably metered in a concentration of 6.5 to 16.5%, so as to help the catalyzing action of kaolin and clay towards polymerization process.

In said repolymerizing mixture, DABCO can be conveniently replaced by substances having the same power to help the attack onto isocyanate as products deriving from the degradation-oxidative depolymerization reaction. For instance, methylene-bis-dimethyl-cycloamine is particularly preferred.

Eventually, in step e) the raw product impregnated with the repolymerization mixture gets through the third chamber of the multistage reactor and is sent to suitable collection means, when the repolymerization reaction is completed in short times, so as to obtain the desired expanded polymer. Said collection means vary depending on the shape to be given to the polymer. Particularly preferred are formworks for obtaining blocks of expanded polymer having a desired shape and density; the same preference goes to the use of a belt conveyor with lifted edges for obtaining continuously blocks or plates of expanded polymer.

The product thus obtained is a sterile stable polymer, characterized by a polyurethane structure with elastic skeleton, heterogeneous flexibility, intercommunicating cells and density to be adjusted depending on applied repolymerization conditions, basically affected by the composition of the repolymerization mixture.

Said expanded polymer has proved excellent as thermo-acoustic insulating material, and can thus be widely used for instance in the building field. Thanks to its long lifetime and high inertia, it has proved as interesting for an economic and ecologic reclamation of caves and dumps as well as for various applications in road engineering and in industry in general. Another interesting application is its possible use as supporting band for out-of-soil cultures. Moreover, it is also perfectly recyclable through the process according to the present invention and is therefore a versatile, economic, environmentally friendly, recyclable material.

The oxido-destruction process is very fast (its average duration is of 10 minutes, preferably even less) and strongly exothermic. It starts at room temperature and develops until it reaches a temperature of about 95-97°C.

The process according to the present invention is carried out in a suitable multicomponent system, shown by way of example in Figure 1, which can be mobile or stationary depending on needs.

Said system comprises at least:
- a first section, for waste volumetric reduction, comprising one or more modules, connected one to the other, in which waste is crushed, compacted, homogenized (volumetric reduction and refining step) ;
- a second section, basically comprising a single stage or multistage reactor and its functional accessories, in which said refined waste undergoes the oxidative demolition-depolymerization process, followed or not by the subsequent repolymerization process (oxido-destruction step).

Said first section preferably comprises means for breaking (Fig. 1, (2)), eliminating metal residues (Fig.' 1, (3)), crushing (Fig. 1, (4)), refining and compacting (Fig. 1, (6)) waste. Preferably, said means are connected in series one to the other by means of belt conveyors and/or belt separators (Fig. 1, (3), (5) (7)), for instance electromagnetic belts, and related loading devices, such as suitable hoppers.

Said second section comprises a reactor, preferably a multistage reactor (Fig. 1, (9)), including in its turn (Fig. 2) :
- a device for loading refined waste;
- a first chamber, whose section is preferably shaped like a cylinder and a frustum of cone, in which the oxidative demolition-depolymerization process takes place;
- a second chamber, whose section is preferably shaped like a cylinder and a frustum of cone, in which the repolymerization process is activated;
- a third chamber, preferably with cylindrical section, in which the repolymerization process develops while the mixture travels towards the reactor discharge.

Said chambers are preferably connected in series one to the other and are equipped with means for mixing and conveying the waste mass to be transformed, as well as with means for metering, restoring, recovering and recycling reagents and catalysts. Said means for mixing and conveying the waste mass to be transformed preferably comprise a shaft-free double blade rotary spiral, having the same profile as the reactor chambers.

In case the refined waste mixture should undergo only step b) of oxidative demolition-depolymerization, so as to obtain the products as in step c), it is also possible to use a reactor having only one chamber shaped like a cylinder and a frustum of cone. In its turn, said chamber shaped like a cylinder and a frustum of cone can be connected in series, if necessary, to a chamber with cylindrical section, for a more convenient discharge of end products.

Preferably, said second section further comprises:
- tanks for storing reagents;
- two twin turbo-electrophotolytic reactors, as previously described and shown schematically in Figure 3, for producing on-site and feeding the super-oxidizing mixture;
- devices for controlling and managing, automatically or not, said system.

Preferably, the system further comprises a third section, for collection, in which end products obtained from the oxido-destruction process are isolated and separated (collection step).

Said third section preferably includes means for separating and collecting end products, such as for instance a solid-liquid separator, preferably a conical spiral continuous extractor, if fertilizing fluid products and dry biomass have to separated, or collection and repolymerization means, such as for instance formworks, if expanded polymers have to be produced.

The oxido-destruction process according to the present invention basically causes a series of complex, abrupt and extremely fast changes in the materials and waste components undergoing said process. The super-oxidizing mixture is formulated so as to obtain in this step the molecular demolition of all substances.

By mere way of non-limiting example, the following can be mentioned: proteins, cellulose, organic colorants containing chromophores such as >C=O or -C=C-, lipids, amino acids, polymers of any type.

In particular, products based on cellulose, i.e. paper, cardboard and above all the residues of cellulose processing and recycling, which cannot be further processed and are destined to thermal destruction, are excellent substrates for the production of expanded polymer.

As far lipids are concerned, the depolymerization resulting from the oxido-destruction process turns them into glycerol and fatty acids.

On the other hand, amino groups of amino acids are turned into ammonia reacting with acetic acid to obtain acet amide. The latter can act as catalyst in the subsequent repolymerization process.

Molecular demolition reactions aim at completely destroying and depolymerizing the materials undergoing the process, with the production of polyols or polyglycols basically comprising OH and CH₂ groups, which are strictly necessary for obtaining the expanded polymer in the subsequent steps.

Also microorganisms are attacked by the strong oxidizing action: hydrogen peroxide and hypochlorite seriously damage the membrane of the bacterium and cause its death.

Depolymerization and subsequent repolymerization to obtain an expanded polymer cause the complete demolition of all pre-existing structures: priones, proteins, viruses, bacteria, microorganisms in general.

The molecular demolition caused by oxidative demolition-depolymerization thus contributes in a decisive way to the complete sterilization of the materials subjected to the process.

Oxidation produces among other things also carbon dioxide and water. The latter can be conveniently recovered, thus obtaining a bacterially pure product to be used as such for watering fields.

Depolymer izations of the substances are carried out sequentially, so as to demolish completely the existing chemical-physical structure and enable the subsequent repolymerization of demolished substances.

The oxidation of organic materials, and of flesh in particular, causes the reaction of fats and unsaturated fatty acids and their depolymerization. Said depolymer ization gives rise to the formation of ethers and esters having a dense-fluid structure, known as polyglycols. After suitable purging processes, the polyglycols thus obtained as first step of flesh oxido-destruction can be used for producing polyols or other substances, to be used in the production of plastic materials, or dried and used as fuel or amending agents. In fleshes, then, water is present in an amount of 75%. In the exothermic process of oxidative demolition-depolymerization, said water is evaporated partially, but as was already mentioned before, it can be recovered obtaining bacterially pure water to be used for instance for watering fields.

As further example, the depolymerization of biomasses, which are widely present in waste and processing scraps, occurs by means of oxygen released by the oxidizing reaction. Glucose present in biomass structure depolymerizes in contact with oxygen generated by decomposition of peroxide and releases carbon dioxide and water, which are necessary to build the cells of the expanded polymer.

Oxygen generated by decomposition of the super-oxidizing mixture (React. 1 below):

2 H₂O₂ + catalyst = 2 H₂O+ O₂ (1)

activates repolymerization reaction. Oxygen easily binds to carbon: the amount of oxygen in the process is suitably formulated both for the depolymerization of materials and for their subsequent repolymerization.

Beyond activating the production of carbon dioxide, which is strictly necessary for building the cells of the expanded polymer, oxygen is thus also the drive behind the repolymerization of the products deriving from waste decomposition.

This is due to the fact that oxygen released by peroxides present in the super-oxidizing mixture has an excess of electrons and thus gives a pair of said electrons to diisocyanate carbon, which has few electrons, or of its isomers present in the repolymerizing mixture. This step initiates the repolymerization process involving two electronegative elements: oxygen and nitrogen. As a result of electron transfer from oxygen to carbon, the following bond between DABCO, glycol and isocyanate group is obtained (React. 2 below):

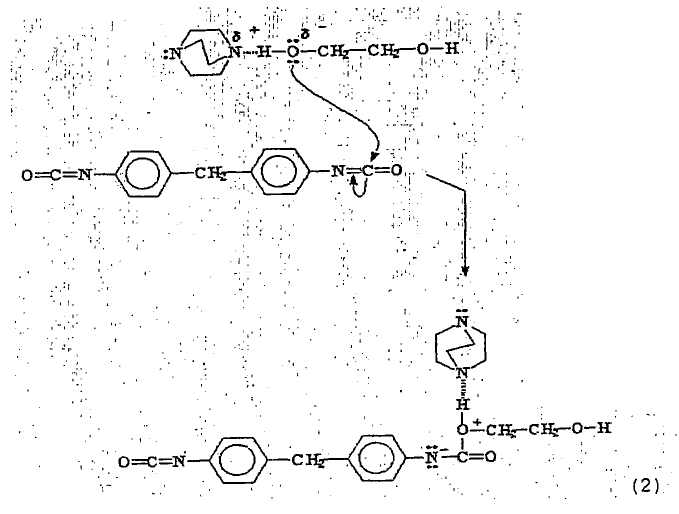

Carbon of isocyanate groups still has few electrons; oxygen, which has a partial negative charge, discharges a flow of electrons and remains with a positive charge, whereas nitrogen still has a negative charge. Oxidative demolition-depolymerization, as described before, gives rise to ethers and esters with dense-fluid structure. Repolymerization to obtain an expanded polymer can be carried out with one scrap or with a plurality of materials, as in the case of household solid or recyclable waste, but it keeps essential chemical-physical properties unchanged. The reason is that the reaction occurs between the reagent diisocyanate of the repolymerizing mixture and OH groups of polyols obtained from the depolymerization of starting materials (React. 3 below):

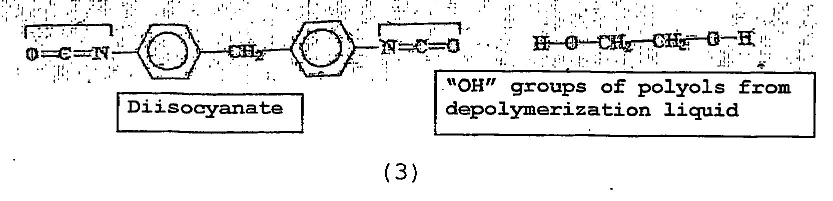

Oxygen, beyond taking part directly to almost all depolymerization reactions, then catalyzes the repolymerization process to obtain an expanded polymer of all materials to be recycled present in the process.

This is basically related to the excess of electrons characterizing it, and to its high amount, which makes it possible to exploit the whole electronegative energy it is charged with.

Electronegativity, in particular, enables oxygen to take electrons away from other atoms. For instance, in the process step shown below, it takes electrons away from hydrogen atom, thus unbalancing the charge of its nucleus. In hydrogen rebalance through electrons is impossible, since they have been carried away by oxygen. Hydrogen is thus left with a weak charge and is saturated by the electron doublet of nitrogen atom of DABCO (React. 4 below):

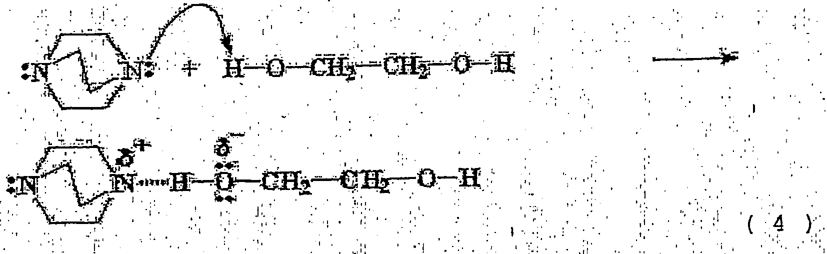

The reaction for building the expanded polymer is progressive; as a matter of fact, it develops gradually as OH groups obtained by depolymerization of biomasses, fatty acids, plastic materials, natural or artificial fibers, become available. As was already pointed out, the active element of the reaction is oxygen, which is always ready to combine depending on reaction needs, thus ensuring the complete transformation during repolymerization (React. 5 below).

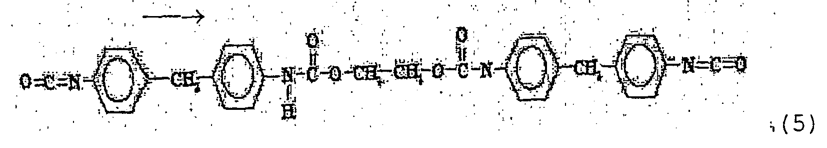

On the other hand, the dimer can react with dimers, trimers, oligomers. The reaction gradually completes uniting all oligomers until an expanded polymer with high molecular weight is obtained. Carbon in isocyanate group is closed between two electronegative atoms, oxygen and nitrogen. Electronegative atoms can attract the electrons belonging to other atoms. Thus, nitrogen and oxygen leave carbon partially electron-deficient. Water gives carbon a pair of electrons as shown in reaction (6) below.

Oxygen, after giving electrons to carbon, generates a negative charge. The nitrogen atom with negative charges is instable and thus balances its charge by taking a hydrogen atom from water (React. 6 below).

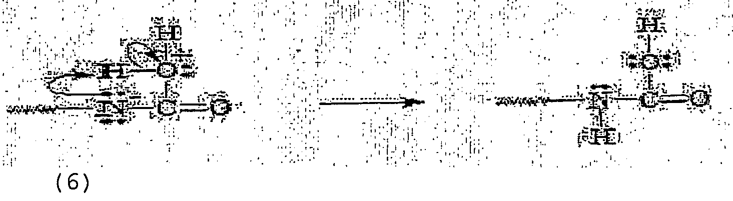

Nitrogen then takes another hydrogen atom. The reaction eventually generates a terminal amine on the oligomer and releases a CO₂ molecule (React. 7 below).

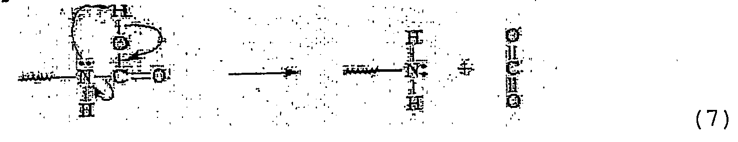

Carbon dioxide, which is built through reaction (7) during repolymerization, expands the fluidized mass as a result of oxido-destructive depolymerization of pre-existing chemical structures, until the polycondensation process is over, which releases all water molecules in form of vapor, leaving the new polymer anhydrous.

Finally, the recycling of heterogeneous materials has enabled the formation of the desired expanded polymer, with elastic skeleton, heterogenous flexibility, intercommunicating cells (React. 8 below).

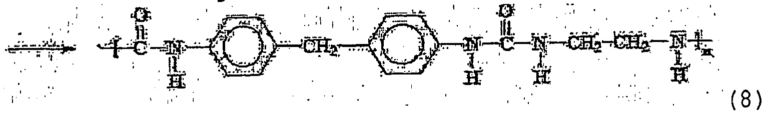

The transformation of most various materials thus performed allows to recycle, also without a substantial preliminary selection, scraps and waste, without releasing fumes in the atmosphere, without residual ashes, in other words with no environmental impact. The product thus obtained can be used as a long-life item in building and industry as a thermo-acoustic insulating material or for cave reclamation. The super-oxidizing mixture and the subsequent repolymerizing mixture enable to obtain an expanded polymer, perfectly sterile and stable in time, also using as raw material for generating the OH groups required in the process highly rotting fleshes and household solid waste, whose microbial content is of hundreds of thousands of germs. The mixture of peroxides stabilizes all reducing compounds that might be present in household solid waste, in purging sludge, in agricultural and industrial scraps to be stabilized or recycled. The oxide-destruction reaction, whatever the chemical-physical structures of the materials to be treated, results in an automatic destruction and stabilization of organic and inorganic compounds that might be present, i.e. for instance: sulfides, cyanides, bivalent iron and manganese, phenols, aldehydes, aromatic amines, sulfurated compounds, carbohydrates, ketones, esters, aliphatic acids and amines, as well as aromatic compounds with acryl, nitro or unsaturated alkyl groups, and eventually also poorly reactive compounds, such as benzene, halogenated hydrocarbons and saturated aliphatic compounds. The formulation of oxidizing agents is metered for destruction, and thus enables the transformation and complete saturation of all aforesaid compounds, allowing to stabilize compost in very short times and not to dispose of reducing compounds. Even more important is for instance the action of deactivation of infective agents from EST or BSE. Said agents do not survive after oxido-destruction. In particular, as far as flesh destruction is concerned, the microbial load of mesophiles during the first treatment step is of 6.0 x 10⁹, whereas it is < 1 after depolymerization and repolymerization process. In other words, the end product is perfectly sterile and therefore suitable for an environmentally friendly disposal, or it can be used directly also in food-related fields, for instance as substrate for cultivating edible mushrooms, instead of sterilized straw. Expanded polymers have a high chemical stability; as reticulated polymers they have an excellent resistance to solvents and chemicals in general. Biological stability has been proved by tests showing how said expanded polymers inoculated with microorganisms present in the soil *(Aspergillus, A. flavus, chetomiun globosum)* are not characterized by colony growth after 28 days. Still said expanded polymers, subjected to the action of percolate, have given non-degradation analytical results, as well as those directly buried in dumps and controlled after 18 months have shown no degradation or development of microorganisms. On the basis of said results, as an alternative to the use as thermo-acoustic insulating material, the expanded polymer according to the invention can be produced at high density (1,000 kg/m³) and used for environmental reclamations.

By way of conclusion, in one case the strong super-oxidative reaction causes for instance the demolition-depolymerization of humid and/or green waste and its complete sterilization and stabilization.

In the other case, the repolymerization reaction turns all materials into one expanded polymer with polyurethane elastic structure and with intercommunicating cells.

The oxide-destruction process according to the present invention therefore sets itself as an environmentally friendly and cheap alternative to traditional thermal destruction and biostabilization carried out with atmospheric air; as a matter of fact, it enables the sterilization and biostabilization of waste without air addition, and the recycling of all waste fractions, none being excluded, turning them into sterile biostabilized products and/or expanded polymers.

A brief summary of the advantages of the present invention with respect to the prior art of waste disposal and recycling is hereinafter displayed by way of example, not binding for the person skilled in the art.
- Oxido-destruction applies to household solid waste, special waste, hospital waste, scrap materials, so as to produce an expanded polymer to be used for environmental reclamation (if it is a high-density polymer) or as thermo-acoustic insulating material (if it is a low-density polymer).
- Oxido-reduction applies to animals' carcasses and to slaughtering scraps and scraps of fish industries, with the recovery of biologically sterile water and/or the production of sterile stabile inert substances or of polyglycols for industrial applications, thus avoiding burning or transformation into animals' meals.
- The process is carried out in a dedicated reactor, either stationary or mobile, with fully automated cycle and without polluting emissions of any kind: gas, solid or liquids.
- It is possible to install mobile systems on wheels directly in dumps, slaughterhouses or in firms producing scraps, so as to prevent environmental pollution related to the transfer of materials to be disposed of.
- The oxido-destruction process is fast: the whole automatic continuous cycle lasts for about 10 minutes, preferably even less, including crushing, refining and transformation into a time-stable sterile non-polluting expanded polymer or into a stable sterile biostabilized product.
- Polymer materials obtained after repolymerization can be re-used to building, road engineering and industrial purposes, thanks to their mechanical stability, sterility and non-rottenness.
- It is possible to reclaim sites polluted by asbestos powders by spraying onto the polluted area the super-oxidizing mixture and then the repolymerizing mixture, generating on-site the oxido-destruction process with the formation of cellular material free of toxic fibers.
- It is possible to remove ammoniacal nitrogen, which is present for instance in the urines of the animals to be transformed, in sludge, in waste, etc. by breakpoint, after a suitable metering of sodium hypochlorite.
- The oxido-destruction treatment in a continuous reactor applies to all fractions of solid waste, also to those commonly destined to dumps, without preliminary selection, washing, drying etc., with the preferential production of expanded polymers at low (~50-200 kg/m³), medium (~200-500 kg/m³) or high (~500-1000 kg/m³) density depending on the destination of the desired end product.
- It is possible to carry out a sterile biostabilization of household solid waste and processing scraps as such, or of the humid and green fraction, via depolymerization through the super-oxidizing mixture according to the invention, with the instantaneous production both of combustible dry sterile biomass and of humid fraction, or of fresh fertilizing compost to be used as amending material or for recovering dumps.
- It is possible to carry out an instantaneous sterile biostabilization of reducing substances, sludge, noxious waste, ashes from burners, drains from tan industries, thanks to the super-oxidizing action catalyzed by the micronized molecular sieves, which further act as trappers for toxic materials, in particular heavy metals.
- It is possible to carry out a convenient recycling process for rubber, which can be used in the production of road or sports grounds or anti-vibration substrates. After treatment with super-oxidizing mixture and repolymerizing mixture, rubber granules and powder are vulcanized and then laid and rolled; the substrate thus obtained can be walked on after 120 minutes.

### SCHEMATIC EXAMPLE OF SOME PREFERRED APPLICATIONS OF THE INVENTION

### - Treatment of slaughtering and fish-processing scraps to as to obtain expanded polymer

Process steps:
- Collecting the animal, animal residues or meals with a suitable box in disinfecting bath, however not compulsory though preferable so as to prevent the diffusion of stinking polluting substances.
- Introducing the animal or its residues into a crusher, which reduces them to a size below 10 cm.
- A refiner downstream from the crusher further reduces flesh and bones into small fragments, below one centimeter, practically a mush, so as to make oxidative attack easier in the following step inside the process reactor.
- The mush made of flesh and bones is fed into the oxide-destruction reactor. Said reactor comprises two chambers whose section is shaped like a cylinder and a frustum of cone, containing the reacting mixtures and the catalysts, and one with cylindrical section, as described above. Moreover, the reactor houses inside a mixing and continuous transfer system, comprising a double blade spiral with wear-preventing insert having a decreasing cone-shaped section.
- The mush of flesh and bones, as soon as it gets in contact with the super-oxidizing mixture of the first reactor chamber, undergoes the oxidative demolition-depolymerization process which ends up in 50 seconds. The time spent inside the first chamber is adjusted so as to enable the complete transformation of flesh into polyglycol.
- Polyglycol is fed into the second reactor chamber, containing the repolymerizing mixture, and here it is mixed intensively with said mixture. The residual oxidizing mixture, still present in polyglycol, immediately initiates, and therefore catalyzes, the repolymerization reaction.
- The mixture undergoing repolymerization is conveyed continuously through the third reactor chamber and discharged into suitable formworks, where the step of repolymerization of the desired expanded polymer is completed and blocks of said polymer having the desired shapes are obtained.
- The process last on the whole 5 to 15 minutes.
- **Biostabilization and/or polymerization of untreated waste or of humid and green fraction**

Process steps
- Material crushing as described above.
- Separation of iron materials and refining.
- Identical super-oxidizing treatment both for materials to be depolymerized and biostabilized only, and for those to be converted into expanded polymer; i.e. introduction of the refined materials into the super-oxidizing bath present in the first reactor chamber shaped like a cylinder and a frustum of cone, equipped inside with a double blade spiral shaped like a frustum of cone with wear-preventing insert so as to mix and transfer the material.
- Only for waste to be biostabilized: feeding the oxidizing materials inside the first reactor chamber to a two-stage continuous screw press, in order to recycle the super-oxidizing reagent and recover water released during oxidative depolymerization.
- Only for waste to be polymerized: continuous transfer and introduction of the oxidative materials into the subsequent repolymerizing reacting bath contained in the second reactor chamber.
- Beginning of repolymerization reaction in the third cylindrical chamber of the continuous reactor, inside which a double blade cylindrical spiral with wear-preventing insert is operating.
- Discharge into formworks for the formation of blocks of expanded polymer with the desired density, or onto a belt platform with lateral walls for the continuous formation of blocks or plates of said polymer.
- **Treatment of household solid and assimilable waste**

The same processing steps as described above basically apply also to the oxido-destructive treatment of household solid and assimilable waste.

The same treatment can apply to other types of waste.

The materials present in most waste, which can therefore be treated with the process and system according to the present invention, are generally:
- Plastic materials in the most different forms and formulations;
- Paper and cardboard not conveyed to separate collection because together with other waste;
- Processing scraps which cannot be separated from the remaining waste;
- Organic substances;
- Inorganic substances;
- Iron materials (for sterilization only);
- Non-iron materials (for sterilization only);
- Wood fragments;
- Asbestos.

Obviously, the person skilled in the art should regard the list above as purely indicative. The application of the process according to the invention to other types of waste materials should in fact be considered as clearly manifest by such a skilled person.

## Claims

1. An industrial process for recycling every type of waste, comprising the following steps:
a) physical preliminary treatment for waste volumetric reduction and compacting, so as to obtain a homogenous refined mixture free of ferrous/metal and/or too large residues;
b) feeding said mixture deriving from step a) into a first chamber of a multistage reactor, in which the mixture undergoes an oxidative demolition-depolymerization process;
c) feeding said oxidized mixture deriving from step b) into a solid-liquid extractor, in which the mixture is separated into its components, so as to obtain a biologically stable, sterile, fluid organic phase and a solid sterile dry phase; or
d) feeding said oxidized mixture deriving from step b) into a second chamber of said multistage reactor, in which the mixture is activated to a repolymerization process;
e) feeding said activated mixture deriving from step d) into a third chamber of said multistage reactor, in which said repolymerization develops, and then into suitable collection or conveying means, in which said repolymerization reaction is completed, so as to obtain a sterile stable expanded polymer;
said process being **characterized in that**:
- the oxidative demolition-depolymerization reaction of step b) is carried out by intensively mixing the mixture from step a) with a super-oxidizing mixture in the presence of catalysts comprising a mixture of molecular sieves, kaolin, clay, sodium aluminum silicates;
- the repolymerization reaction of step d) is carried out by intensively mixing said oxidized mixture with a repolymerizing mixture, in the presence of catalysts.

2. The process according to claim 1, in which said molecular sieves are metered from about 1% to about 4% by weight, with respect to the weight of waste entering the reactor.

3. The process according to claim 1, in which said mixture of catalysts has the following composition in percentage by weight: 75% of molecular sieves, 10% of kaolin, 8% of clay, 7% of sodium aluminum silicate blue powder.

4. The process according to anyone of claims 1 to 3, **characterized in that** said super-oxidizing mixture is prepared by mixing two different oxidizing solutions, prepared each in two turbo-electrophotolytic reactors, and comprises an amount of highly reactive oxidizing species, such as hydroxyl radicals OH, ozone O₃, sodium hypochlorite NaClO, peroxides.

5. The process according to claim 4, in which the first one of said two oxidizing solutions is prepared by treatment in a turbo-electrophotolytic reactor of an acid mixture A) comprising: peroxides, acetic acid, citric acid, stabilizers.

6. The process according to claim 4, in which the second one of said two oxidizing mixtures is prepared by treatment in a turbo-electrophotolytic reactor of a mixture B) comprising an aqueous phase added with brine.

7. The process according to anyone of claims 1 to 3, in which said repolymerization mixture comprises:
- a mixture of diphenyl-methane-4,4'-diisocyanate and/or isomers and homologues thereof, containing about 25% to 35% of NCO groups, preferably about 30 to 32%; said mixture being dispersed into an isomeric mixture of xilenes;
- diazabicyclooctane (DABCO);
- additives, such as N,N-dimethyl-acetylamine or N,N-dimethyl-aminoethanol;
- catalysts.

8. A system for carrying out the process according to any of the preceding claims, comprising at least:
- a first section, comprising one or more modules, connected one to the other, for crushing, compacting and homogenizing waste;
- a second section, comprising a single stage or multistage reactor, for submitting said refined waste coming from the first section to an oxidative demolition-depolymerization process followed or not by a subsequent repolymerization process.

9. The system according to claim 8, in which said second section comprises a multistage reactor including in its turn:
- a device for loading refined waste;
- a first chamber, in which the oxidative demolition-depolymerization process occurs;
- a second chamber, in which the repolymerization process is activated;
- a third chamber, in which the repolymerization process develops, during the transfer of the waste mixture towards the reactor discharge.

10. The system according to claim 8, in which said second section further comprises:
- tanks for storing reagents;
- two turbo-electrophotolytic reactors for producing on-site the super-oxidizing mixture;
- devices for controlling and managing the system.

11. The system according to claim 10, wherein the turbo-electrophotolytic reactor comprises the combination into one reactor body of:
- an electrolytic cell;
- a photolytic reactor.

12. Use of the process according to any of the claims 1 to 7 for recycling every type of waste.

13. Use of the system according to any of the claims 8 to 11 for recycling every type of waste.

14. Use according to anyone of claims 12 and 13, for producing:
- a perfectly sterile fertilizing compost, having a liquid or fluid-dense consistency;
- a biologically stable sterile solid dry biomass ; or
- a sterile expanded polymer, with elastic skeleton, heterogeneous flexibility and intercommunicating cells.

## Patentansprüche

1. Ein Industrieverfahren zum Recycling aller Arten von Abfall, das folgende Schritte umfasst:
a) physikalische Vorbehandlung zur Volumenreduzierung und Kompaktierung von Abfall, um eine homogene und vorbehandelte eisen-/metallfreie Mischung und/oder eine Mischung ohne zu große Rückstände zu erzielen;
b) Einführung der genannten durch Schritt a) entstandenen Mischung in eine erste Kammer eines mehrstufigen Reaktors, in der die Mischung einem oxidativen Zerstörungs- und Depolymerisationsprozess unterzogen wird;
c) Einführung der genannten durch Schritt b) entstandenen oxidierten Mischung in eine Anlage zur Fest-Flüssig-Exträktion, in der die Mischung in ihre Bestandteile getrennt wird, sodass eine biologisch stabile, sterile, flüssige organische Phase und eine feste sterile trockene Phase erzielt wird; oder
d) Einführung der genannten durch Schritt b) entstandenen oxidierten Mischung in eine zweite Kammer des genannten mehrstufigen Reaktors, in der die Mischung zu einem Repolymerisationsprozess aktiviert wird;
e) Einführung der genannten durch Schritt d) entstandenen aktivierten Mischung in eine dritte Kammer des genannten mehrstufigen Reaktors, in der sich die genannte Repolymerisation entwickelt, und dann in geeignete Mittel zum Aufsammeln oder Fördern, in denen die genannte Repolymerisationsreaktion zu Ende geführt wird, sodass ein steriles, stabiles Schaumpolymer entsteht; der genannte Prozess ist **dadurch gekennzeichnet, dass**:
- die oxidative Zerstörungs-/Depölymerisationsreaktion aus Schritt b) durch die starke Vermengung der Mischung aus Schritt a) mit einer überoxidierenden Mischung mit Katalysatoren erfolgt, die eine Mischung aus Molekularsieben, Kaolin, Ton, Natriumaluminiumsilicaten enthalten;
- die Repolymerisationsreaktion aus Schritt d) durch die starke Vermengung der genannten oxidierten Mischung mit einer Repolyermisationsmischung mit Katalysatoren erfolgt .

2. Verfahren nach Anspruch 1, bei dem die genannten Molekularsiebe von etwa 1 Gew.% bis etwa 4 Gew.% in Bezug auf das Gewicht des Abfalls bemessen sind, der in den Reaktor eingeleitet wird.

3. Verfahren nach Anspruch 1, bei dem die genannte Mischung aus Katalysatoren die nachfolgende Zusammensetzung nach Gewichtsanteilen aufweist: 75 % Molekularsiebe, 10 % Kaolin, 8 % Ton, 7 % Blaupulver-Natriumaluminiumsilicat.

4. Verfahren nach einem der Ansprüche von 1 bis 3, **dadurch gekennzeichnet, dass** die genannte überoxidierende Mischung durch das Vermischen von zwei verschiedenen oxidierenden Lösungen vorbereitet wird, die jeweils beide in zwei turbo-elektrophotolytischen Reaktoren vorbereitet werden, und eine Menge an hoch reaktiven oxidierenden Spezies wie Hydroxylradikale - OH, Ozon O₃, Natriumhypochlorid NaClO, Peroxide enthält.

5. Verfahren nach Anspruch 4, bei dem die erste der beiden genannten oxidierenden Lösungen durch Behandlung einer sauren Mischung A) in einem turbo-elektrophotolytischen Reaktor vorbereitet wird, die Folgendes enthält: Peroxide, Essigsäure, Zitronensäure, Stabilisatoren.

6. Verfahren nach Anspruch 4, bei dem die zweite der beiden genannten oxidierenden Lösungen durch Behandlung einer Mischung in einem turbo-elektrophotolytischen Reaktor vorbereitet wird, die eine wässrige Phase mit Laugenzusatz enthält.

7. Verfahren nach einem der Ansprüche von 1 bis 3, bei dem die genannte Repolymerisationsmischung Folgendes enthält:
- eine Mischung aus Diphenylmethan-4,4'-Diisocyanat und/oder Isomeren oder deren Homologen mit einem Gehalt von etwa 25 % bis 35 % von NCO-Gruppen., vorzugsweise etwa 30 bis 32 %; die genannte Mischung wird in einer isomerischen Mischung aus Xylenen dispergiert;
- Diazabicyclooctan (DABCO);
- Additive wie N,N-Dimethylacetylamin oder N,N-Dimethylaminoethanol;
- Katalysatoren.

8. Ein System zur Durchführung des Verfahrens nach einem beliebigen der zuvor genannten Ansprüche, das mindestens Folgendes umfasst:
- einen ersten Abschnitt mit einem oder mehreren miteinander verbundenen Modulen für das Zerkleinern, Kompaktieren und Homogenisieren von Abfall;
- einen zweiten Abschnitt mit einem einstufigen oder mehrstufigen Reaktor, um den genannten vorbehandelten Abfall aus dem ersten Abschnitt einem oxidativen Zerstörungs-/Depolymerisationsprozess zuzuführen, auf den dann ein späterer Repolyermisationsprozess folgen kann oder nicht.

9. System nach Anspruch 8, in dem der genannte zweite Abschnitt einen mehrstufigen Reaktor umfasst, der wiederum Folgendes enthält:
- eine Vorrichtung für die Einführung von vorbehandeltem Abfall;
- eine erste Kammer, in der der oxidative Zerstörungs/Depolyermisationsprozess erfolgt;
- eine zweite Kammer, in der der Repolyermisationsprozess aktiviert wird;
- eine dritte Kammer, in der sich der Repolymerisationsprozess während der Weiterführung der Abfallmischung zur Reaktorableitung entwickelt.

10. System nach Anspruch 8, in dem der genannte zweite Abschnitt weiterhin Folgendes umfasst:
- Tanks für die Reagenzien;
- zwei turbo-elektrophotolytische Reaktoren zur Herstellung der überoxidierenden Mischung vor Ort;
- Vorrichtungen für die Kontrolle und die Verwaltung des Systems.

11. System nach Anspruch 10, in dem der turbo-elektrophotolytische Reaktor die Kombination in einem Reaktorkörper von Folgendem umfasst:
- einer elektrolytischen Zelle;
- einem photolytischen Reaktor

12. Verwendung des Verfahrens nach einem der Ansprüche von 1 bis 7 zum Recycling aller Arten von Abfall.

13. Verwendung des Systems nach einem der Ansprüche von 8 bis 11 zum Recycling aller Arten von Abfall.

14. Verwendung nach einem beliebigen der Ansprüche 12 und 13 zur Herstellung:
- eines perfekt sterilen Düngekomposts mit einer flüssigen oder flüssig-dichten Beschaffenheit;
- einer biologisch stabilen, sterilen, festen, trockenen Biomasse; oder
- eines sterilen Schaumpolymers mit elastischem Gerüst, heterogener Flexibilität und miteinander verbundenen Zellen.

## Revendications

1. Processus industriel pour le recyclage de tous les types de déchets, composé des étapes suivantes :
a) traitement physique préliminaire pour la réduction du volume et le compactage des déchets, afin d'obtenir un mélange homogène affiné sans résidus de fer/métal et/ou sans résidus de trop grande taille ;
b) acheminement dudit mélange provenant de l'étape a) vers une première chambre d'un réacteur multi-étagé, dans laquelle le mélange est soumis à un processus de dépolymérisation-dégradation oxydative ;
c) acheminement dudit mélange oxydé provenant de l'étape b) vers un extracteur solide-liquide, dans lequel les composés du mélange sont séparés, afin d'obtenir une phase organique fluide, stérile et biologiquement stable et une phase sèche, stérile et solide; ou
d) acheminement dudit mélange oxydé provenant de l'étape b) vers une deuxième chambre dudit réacteur multi-étagé, dans laquelle le mélange est activé pour enclencher un processus de repolymérisation ;
e) acheminement dudit mélange activé provenant de l'étape d) vers une troisième chambre dudit réacteur multi-étagé, dans laquelle ladite repolymérisation se produit, et ensuite vers des moyens de collecte ou de transport adéquats, dans lesquels ladite réaction de repolymérisation s'achève, afin d'obtenir un polymère expansé stable et stérile ; ce processus étant **caractérisé en ce que** :
- la réaction de dépolymérisation-dégradation oxydative de l'étape b) se fait en mélangeant intensivement le mélange de l'étape a) avec un mélange super oxydant en présence de catalyseurs, comprenant un mélange de tamis moléculaires, de kaolins, d'argiles et de silicates alumino-sodiques
- la réaction de repolymérisation de l'étape d) se fait en mélangeant intensivement ledit mélange oxydé avec un mélange repolymérisant, en présence de catalyseurs.

2. Processus selon la revendication 1, dans lequel lesdits tamis moléculaires sont dosés de 1% à peu près à 4% à peu près en poids, par rapport au poids des déchets pénétrant dans le réacteur.

3. Processus selon la revendication 1, dans lequel ledit mélange de catalyseurs a la composition suivante, exprimée en pourcentage en poids : 75% de tamis moléculaires, 10% de kaolins, 8% d'argiles, 7% de poudre bleue de silicates alumino-sodiques

4. Processus selon l'une quelconque des revendications de 1 à 3, **caractérisé en ce que** ledit mélange super oxydant est préparé en mélangeant deux différentes solutions oxydantes, étant celles-ci préparées dans deux turboréacteurs électrophotolytiques, et comprend une quantité d'espèces oxydantes très réactives, telles que les radicaux hydroxyles -OH, l'ozone O₃, l'hypochlorite de sodium NaClO et les peroxydes.

5. Processus selon la revendication 4, dans lequel la première des deux solutions oxydantes susmentionnées est préparée en traitant, dans un turboréacteur électrophotolytique, un mélange acide A) comprenant: des peroxydes, de l'acide acétique, de l'acide citrique et des stabilisants.

6. Processus selon la revendication 4, dans lequel le deuxième des deux mélanges oxydants susmentionnés est préparé en traitant, dans un turboréacteur electrophotolytique, un mélange B) comprenant une phase aqueuse avec ajout de saumure.

7. Processus selon l'une quelconque des revendications de 1 à 3, dans lequel ledit mélange de repolymérisation comprend :
- un mélange de 4,4'-diisocyanate de diphénylméthane et/ou d'isomères et leurs homologues, contenant de 25% à 35% à peu près de groupes NCO, de préférence de 30 à 32% à peu près ; ledit mélange étant dispersé dans un mélange isomère de xylènes ;
- le diazabicyclooctane (DABCO) ;
- des additifs, tels que N,N-diméthylacétylamine ou N,N-diméthylaminoéthanol ;
- des catalyseurs.

8. Système pour mettre en application le processus selon l'une quelconque des revendications précédentes, comprenant au moins:
- une première partie faite d'un ou de plusieurs modules, raccordés entre eux, pour broyer, compacter et homogénéiser les déchets ;
- une deuxième partie faite d'un réacteur mono-étagé ou multi-étagé, pour soumettre lesdits déchets affinés, provenant de la première partie, à un processus de dépolymérisation-dégradation oxydative, lequel sera suivi ou non d'un ultérieur processus de repolymérisation.

9. Système selon la revendication 8, dans lequel ladite deuxième partie comprend un réacteur multi-étagé composé, à son tour, d' :
- un dispositif de chargement des déchets affinés ;
- une première chambre, dans laquelle le processus de dépolymérisation-dégradation oxydative se produit ;
- une deuxième chambre, dans laquelle le processus de repolymérisation est activé ;
- une troisième chambre, dans laquelle le processus de repolymérisation se produit, pendant le transfert du mélange des déchets vers la sortie du réacteur.

10. Système selon la revendication 8, dans lequel ladite deuxième partie comprend également:
- des réservoirs pour stocker les réactifs ;
- deux turboréacteurs électrophotolytiques pour préparer in situ le mélange super oxydant ;
- des dispositifs pour contrôler et gérer le système.

11. Système selon là revendication 10, dans lequel le turboréacteur électrophotolytique comprend l'ajout, dans un corps du réacteur, d' :
- une cellule électrolytique ;
- un réacteur photolytique.

12. Utilisation du processus selon l'une quelconque des revendications de 1 à 7 pour le recyclage de tous les types de déchets.

13. Utilisation du système selon l'une quelconque des revendications de 8 à 11 pour le recyclage de tous les types de déchets.

14. Utilisation selon l'une quelconque des revendications 12 et 13 pour produire :
- un compost fertilisant parfaitement stérile, doté d'une consistance fluide-dense ou liquide.
- une biomasse sèche solide, stérile et biologiquement stable ; ou
- un polymère expansé stérile avec un squelette élastique, une flexibilité hétérogène et des cellules communicantes.
